Europäisches Patentamt

European Patent Office

Office européen des brevets

(11) Veröffentlichungsnummer: **0 416 341 A1**

# EUROPÄISCHE PATENTANMELDUNG

(21) Anmeldenummer: 90115666.1

(22) Anmeldetag: 16.08.90

(51) Int. Cl.5: **B23K 7/00**, B23K 26/00, B23K 28/00

(30) Priorität: 05.09.89 DE 3929345

(43) Veröffentlichungstag der Anmeldung:
13.03.91 Patentblatt 91/11

(84) Benannte Vertragsstaaten:
DE FR GB IT

(71) Anmelder: MESSER GRIESHEIM GMBH
Hanauer Landstrasse 330
W-6000 Frankfurt/Main(DE)

(72) Erfinder: **Derse, Josef, Dr.**
**Platanenring 45**
**W-6458 Rodenbach 1(DE)**
Erfinder: **Gollwitz, Karl**
**Offenthaler Strasse 7**
**W-6073 Egelsbach(DE)**
Erfinder: **Hirschberg, Hans, Dr.**
**Kastanienhain 31**
**W-6232 Bad-Soden 3(DE)**

(54) **Bedienarme thermische Schneidmaschine.**

(57) Die Erfindung betrifft eine thermische Schneidmaschine, bei der durch Kombination einer Anzahl bekannter Automatisierungsschritte ein vollautomatischer Betrieb ohne Bedienungsperson erreicht wird unter Einhaltung aller sicherheitstechnischen Vorschriften.

EP 0 416 341 A1

## BEDIENARME THERMISCHE SCHNEIDMASCHINE

Die Erfindung bezieht sich auf eine thermische Brennschneidmaschine mit mindestens zwei Brennerwagen, die mit Autogenbrennern, Plasmaschneidbrennern und/oder Laserschneidköpfen ausgerüstet sind.

Aufgabe der Erfindung ist die Automatisierung derartiger Maschinen in einem bisher nicht bekannten Umfang, so daß die Maschine vollautomatisch ohne Bedienungspersonal arbeiten kann. Die prozeßspezifischen Parameter, wie Gasmengen, Gasdrücke. Lichtbogenstrom, Lichtbogenspannung etc. werden selbsttätig an der Maschine eingestellt, Schneid- und/oder Markier- und Anzeichen-Werkzeuge werden ausgesucht und angewählt und der sachgemäße Betrieb aller oder einzelner dieser Einrichtungen selbsttätig überwacht. Wenn durch Transportmittel das Rohmaterial an eine definierte Stelle gelegt worden ist, dann richtet sich die Maschine auch selbst mit ihren Bearbeitungswerkzeugen zum Schneiden und/oder Markieren auf die entsprechenden Startpunkte ein. Ein Eingreifen von Menschen in den Produktionsprozeß ist nur im Falle von Störungen erforderlich. Störungen werden von diesen Maschinen selbsttätig festgestellt und akustisch angezeigt bzw. die Einrichtung im Falle von Gefahr selbsttätig stillgesetzt.

Stand der Technik sind bisher nur Teilautomatisierungen. So ist z. B. bekannt, daß der computernumerischen Steuerung mitgeteilt wird, einzelne Brenner automatisch zu positionieren und den Mittenabstand zwischen Schneidbrennern und Markierungswerkzeugen automatisch einzustellen. Es ist auch möglich in Abhängigkeit von der Bauteilgröße, einige aus einer Vielzahl auf der Maschine befindliche Brenner auszuwählen, durch Adressieren. Diese Informationen werden der Maschine durch geeignete Speichermittel, z. B. Lochbänder, Magnetbänder, ROM oder RAM oder EPROM Speicher zugeführt. Es sind auch Lösungen bekannt, wo entweder ein übergeordneter Rechner oder ein Personal Computer in DNC-Betrieb oder gar im CIM-Betrieb die genannten Informationen an die Maschine leiten. Ein Beispiel hierfür ist in der Messer Griesheim Zeitschrift "Trennen und Fügen", Ausgabe 19, Seite 4 ff. dargestellt.

Es ist auch bekannt, mittels entsprechender Steuersignale die Brenner automatisch zu positionieren und den Brennermittenabstand entsprechend der Bauteilgröße einzustellen. Das gleiche gilt für das automatische Einstellen und Konstanthalten des Düsenabstandes vom Werkstück. Als Beispiel wird verwiesen auf den MGG Sonderdruck 10/84 -Brennerwagenpositionierung. Da bei Autogenschneidbrennern zündfähige und explosive Gasgemische austreten, ist es aus Sicherheitsgründen absolut notwendig, zu überwachen, ob die Zündung bei allen Brennern, bei denen eine Zündung vorgenommen werden soll, tatsächlich erfolgt ist und im Fehlzündungsfalle eine Warnung erzeugt wird und die Gaszufuhr automatisch abgestellt wird. Dies ist bei thermischen Schneidmaschinen mit Bedienungspersonal zwar wünschenswert, aber bei Maschinen, die ohne Bedienpersonal betrieben werden sollen, eine sicherheitstechnische Notwendigkeit.

Es gibt bereits eine Reihe von Ansätzen für das Überwachen des Brennschnittes, um festzustellen, ob an einem oder mehreren Brennern auf einer Maschine der Brennschnitt unterbrochen wurde und auch die Möglichkeit, in Auswertung dieser überwachung die Maschine stillzusetzen. Die meisten dieser Lösungen aber beobachten den Schlackenflug unterhalb des Bleches und haben deshalb, weil der Schlackenflug aus chemisch-physikalischen Gründen nicht konstant ist, die Maschinen viel häufiger stillgesetzt, als dies aus technologischen Gründen notwendig war. Sie haben also eher die Maschine behindert als zu ihrer Mechanisierung beigetragen. In gleicher Weise waren die Lösungsansätze mit Fotodioden, die Intensität der Heizflamme von oben zu beobachten, unzureichend, weil sie auf der Annahme beruhten, daß der Schnitt nur abreißt, wenn die Heizflamme aus irgendwelchen Gründen erlöscht. Tatsächlich aber kann der Schnitt weniger wegen Erlöschen der Heizflamme, sondern wegen Unsauberkeiten auf der Oberfläche des Werkstückes, z. B. Zunder oder Rost, abreißen und diese Vorgänge wurden von solchen Lösungen nicht erkannt. Diese Methoden waren teilweise hilfreich, weil im Falle von Fehlfunktionen der Bedienungsmann immer korrigierend eingreifen konnte. Beim Betrieb ohne Bedienungs personal aber versagen alle diese Methoden. Anspruchsgemäß wird nun eine Methode verwendet, bei der durch den Brenner hindurch beobachtet wird, ob Eisen im reinen Sauerstoffstrom verbrennt oder nicht. Um dies zu erreichen muß an jedem Schneidbrenner der Maschine eine solche Beobachtungseinrichtung installiert werden. Diese wertet das Meßsignal so aus, daß im Falle eines Schnittabrisses an einem oder mehreren Brennern die Maschine entweder stillgesetzt wird - was man bei teuren Werkstücken vorwählen wird - oder aber ein Warnsignal erzeugt. Durch diese Art wird Ausschuß durch Schnittabriß zuverlässig verhindert.

Insbesondere für Autogenschneidbrenner ist eine automatische Regelung der verschiedenen Gasmengen und deren Drücke bedeutsam. Bisher mußte man beim Zuschalten oder Abschalten von mehreren Brennern, die sich auf einer Maschine befinden, an allen verbleibenden Brennern die Heizflammen so korrigieren, daß die optimale Heizflamme wieder erreicht wird, weil durch die drastische Veränderung der Durchflußmengen die Heizflammeneinstellung verändert wurde. Um die beste Schnittflächengüte an den zu erzeugenden Bauteilen zu erreichen, mußte also der Bedienungsmann bei Veränderung der in Betrieb befindlichen Brennerzahl immer korrigierend eingreifen. Bei Brennschneidmaschinen ohne Bedienungspersonal ist dies nicht mehr möglich. Deshalb wurde durch die Gasmengenregelung erfindungsgemäß eine Lösung gefunden, die erreicht, daß unabhängig von der Zahl der gerade auf der Maschine in Betrieb befindlichen Schneidbrenner die Heizflammen optimal eingestellt bleiben, um die beste Schnittflächenqualität an den zu erzeugenden Bauteilen zu erreichen. Beispiele für eine solche Einrichtung sind enthalten in der DE-OS 35 46 644 und der DE-Anmeldung 39 15 247.

Um den automatischen Betrieb thermischer Schneidmaschinen zu gewährleisten, ist es notwendig, daß die Maschine sich zu der Lage des Rohbleches, aus dem Bauteile ausgeschnitten werden sollen, selbsttätig ausrichtet. Dies kann für einen oder auch mehrere Arbeitsplätze notwendig sein; je nach Durchsatzmenge der zu schneidenden Teile. Bisher hat der Bedienungsmann die thermische Schneidmaschine und die einzelnen auf dieser Maschine befindlichen Werkzeuge zu der Position des Rohbleches, aus dem ein oder mehrere Teile gleichzeitig ausgeschnitten werden, von Hand ausgerichtet. Da die thermische Schneidmaschine nun ohne Bedienungspersonal arbeiten soll, wurde erfindungsgemäß dafür eine automatische Lösung gefunden. Solange die Rohbleche von einer Transportrichtung immer an eine definierte Stelle gelegt werden, richtet sich die Maschine durch die Nullpunkt- und Referenzpunkteinrichtung automatisch jeweils auf diese Lage des Rohbleches aus, auch wenn für eine Maschine zwei oder mehr solche Referenzpunkte erforderlich sind. Mit den Elementen Nullpunkt- und Referenzpunkteinrichtung und automatische Brennerwagenpositionierung können nun die Maschine und die einzelnen Brennerwagen, die sich auf einer thermischen Schneidmaschine befinden, automatisch auf die jeweiligen Startpunkte in bezug auf die Außenmaße eines Rohbleches eingerichtet werden.

Ein wichtiger Schritt in Richtung auf völlige Automatisierung ohne Bedienpersonal ist das Wiederauffinden und Wiederaufgreifen des Schnittes an einer Schadstelle, z. B. bei Schnittabriß oder bei Stromausfall. Die x- bzw. y-Nullpunkteinstellung ermöglicht es der CNC und der Maschine, die genaue Stelle des Schadensfalles auch bei Stromausfall nach Beseitigung der Störung wiederzufinden und den Schnitt automatisch an der richti gen Stelle ohne nennenswerte Beschädigung der Bauteile wieder aufzunehmen.

Bei Verwendung von Plasmaschmelzschneidbrennern ist eine automatische Regelung von Strom und Spannung des Plasmalichtbogens notwendig und eine automatische Überwachung des Hauptlichtbogens, des Lichtbogenstromes und der -spannung und eine automatische Schnittabrißkontrolle.

Da die Stromquellen für Plasmaschmelzschneidbrenner aus Gewichtsgründen räumlich getrennt von der thermischen Schneidmaschine aufgestellt werden, ist eine Ferneinstellung mit in der computernumerischen Steuerung der Brennschneidmaschine gespeicherten Technologiedaten für den bedienarmen Betrieb einer solchen thermischen Schneidmaschine erforderlich. Dafür werden die Daten für Gasmenge und -druck und Wassermenge eingestellt nach in der CNC gespeicherten Technologiedaten.

Bei der Verwendung von Lasern ist es analog notwendig, die Laserleistung, beim gepulsten Laser die Amplitude, das Tastverhältnis und die Frequenz, die Schneidgeschwindigkeit, die Gasmenge und den Druck aus der technologischen Datenbank herauszulesen und damit die Daten automatisch an der Laserlichtquelle einzustellen. Bekannt ist z. B. aus dem MGG-Pospekt EBCON L, die die Laserleistung als Funktion der dynamischen Geschwindigkeit einer Schneideinrichtung proportional zur Geschwindigkeitsreduzierung verringert werden kann.

Zur Automatisierung und zum Betreiben einer thermischen Schneidmaschine ist auch eine automatische Brenner-und/oder Düsenwechseleinrichtung vorteilhaft, die entweder in bestimmten festgelegten Zeitintervallen oder nach einem Schadensfall automatisch einen Wechsel beschädigter oder auszuwechselnder Düsen vornimmt. Beispiele hierfür sind in der DE-OS 34 47 304 und der DE-OS 37 35 598 beschrieben.

Die genannten Einrichtungen haben dazu beigetragen, die Wirtschaftlichkeit und die Sicherheit von thermischen Schneidverfahren und/oder die Qualität thermisch geschnittener Teile zu verbessern. Einzelne dieser Einrichtungen oder auch die Kombination von mehreren dieser Einrichtungen haben jedoch nie ausgereicht, um eine thermische Schneidmaschine ohne Bedienungspersonal betreiben zu können. Die durch die Erfindung ermöglichte Zusammenfassung der in den Ansprüchen enthaltenen Merkmale bietet erstmals die Möglichkeit, eine thermische Schneidmaschine mit Autogenschneidbrennern, Plasmaschmelzschneidbrennern oder mit Laserschneidbrennern bestückt ohne Aufsicht durch Bedienungspersonal zu betreiben. Erfindungsgemäß werden durch die Merkmale in den Ansprüchen alle notwendigen Prozeßparameter an der Maschine selbsttätig eingestellt und überwacht, was im Gegensatz zu spanenden Werkzeugmaschinen nicht nur eine Frage der Kostenreduzierung, sondern ganz wesentlich eine Frage der Sicherheit von Einrichtungen und Menschen bedeutet, z. B. dadurch daß die Bildung von explosiven Gasgemischen zuverlässig verhindert wird.

Die Erfindung bietet den Vorteil, daß durch die Zusammenfassung aller nur einzeln oder zum Teil gemeinsam bekannten Automatisierungsschritte eine bedienarme thermische Schneidmaschine geschaffen wird, die auch den einschlägigen Sicherheitsvorschriften der Druckgasverordnung, der Gewerbeaufsicht, der Berufsgenossenschaften gerecht wird und für die, als wirtschaftlicher besonderer Vorteil, kein Bedienungspersonal notwendig ist.

Die in den Ansprüchen enthaltenen Merkmale sind nicht auf die Beispiele beschränkt, die eingangs erwähnt sind. Die Ausgestaltung der Merkmalselemente und deren Verknüpfung kann beliebig sein, solange mindestens die in den Ansprüchen genannten Merkmale alle erfüllt sind.

In der Figur ist ein Ausführungsbeispiel einer erfindungsgemäßen thermischen Schneidmaschine dargestellt.

Mit (1) ist die Steuerung bezeichnet zur automatischen Einstellung aller brennverfahrens- und bauteilspezifischen Parameter aufgrund von in der Steuerung abgelegten Signale einer Technologie-Datenbank. Auf den Laufbahnen (2) wird die Schneidmaschine in Längs (x)-Richtung verfahren. Auf dem Querträger (3) werden die Brennerwagen (7) mittels eines Querantriebes (4) (Bandantrieb) auf Führungen (9) verfahren. Diesem Bandantrieb ist eine Brennerwagenpositionierung (10) und eine Brenneradressierung (11) zugeordnet. Die Brennerwagen (7) sind bestückt mit mindestens zwei Autogenbrennern (8) oder mit Plasmaschneidbrennern oder Laserschneidköpfen. Auch die Anordnung von drehbaren Dreibrenneraggregaten (5) und (6) ist vorgesehen. Den Brennern (8) ist eine Zündüberwachung (12), eine Schnittüberwachung (13), eine Gasmengenregelung (14) und eine x-, y-Nullpunkt- und Referenzpunkteinrichtung (21) zum Wiederfinden und Wiederaufgreifen des Schnittes an einer Schadstelle bei Schnittabriß oder Stromausfall zugeordnet.

Bei einer Ausbildung des Brenners (8) als Plasmabrenner ist dieser mit einer Strom- und Spannungsregelung (15) für den Plasmalichtbogen verbunden und mit Mitteln (16) zur Ferneinstellung sowie mit Mitteln (17) zur Überwachung und selbsttätigen Stillsetzung bei Störungen im Schneidprozeß.

Wenn ein Brenner (8) als Laserschneidkopf ausgebildet ist, so ist diesem eine Energieregelung (18) für den Laserstrahl zugeordnet zum selbsttätigen Einstellen der technologischen Prozeßparameter7 wie Amplitude, Tastverhältnis, Frequenz, Gasdruck und -menge, Geschwindigkeit.

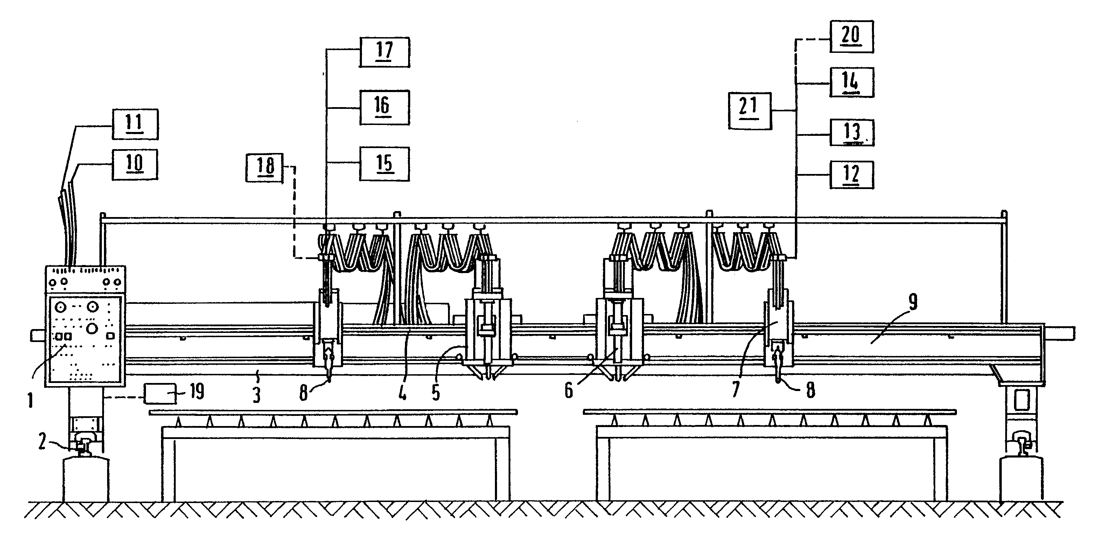

Die Düsenwechselstation (19) ist in den Figuren 1 bis 6 der DE-OS 37 35 598 dargestellt und in der DE-OS beschrieben.

Die Einrichtung (20) zum automatischen Abschalten der Brenngaszufuhr beim Rückzünden oder Abknallen der Flamme des Autogenbrenners (8) ist in der DE-Anmeldung 39 18 760 dargestellt und beschrieben.

## Ansprüche

1. Thermische Schneidmaschine mit mindestens zwei Brennerwagen,
gekennzeichnet durch
- Speichermittel
- Brennerwagenpositionierung
- Brenneradressierung
- Zündüberwachung
- Schnittüberwachung
- Gasmengenregelung, insbesondere für Autogenbrenner
- x-, y-Nullpunkt- und Referenzpunkteinrichtung zum Wiederfinden und Wiederaufgreifen des Schnittes an einer Schadstelle bei Schnittabriß oder Stromausfall, durch eine Steuerung zur automatischen Einstellung aller brennverfahren- und bauteilspezifischen Parameter aufgrund von in der Steuerung abgelegten Signalen einer Technologie-Datenbank.

2. Thermische Schneidmaschine nach Anspruch 1 mit mindestens einem Plasmaschneidbrenner, gekennzeichnet durch
eine Strom- und Spannungsregelung des Plasmalichtbogens und Mitteln zur Ferneinstellung und Überwachung und selbsttätiges Stillsetzen bei Störungen im Schneidprozeß.

3. Thermische Schneidmaschine nach Anspruch 1 mit mindestens einem Laserschneidkopf, gekennzeichnet durch
eine Energieregelung des Laserstrahles, selbsttätiges Einstellen der technologischen Prozeßparameter, wie Amplitude, Tastverhältnis, Frequenz, Gasdruck und -menge, Geschwindigkeit.

4. Thermische Schneidmaschine nach einem der Ansprüche 1 bis 3,
gekennzeichnet durch
eine Brenner- und/oder Düsenwechselstation.

5. Thermische Schneidmaschnine nach Anspruch 1, gekennzeichnet durch
eine Einrichtung zum automatischen Abschalten der Brenngaszufuhr beim Rückzünden oder Abkanllen der Flamme.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0071034 (MESSER GRIESHEIM GMBH) <br> * Ansprüche 1-5 * | 1 | B23K7/00 <br> B23K26/00 <br> B23K28/00 |
| Y | DE-C-1117714 (THE BRITISH OXYGEN CO.LTD.) <br> * Ansprüche 1-4 * | 1 | |
| A | EP-A-0129952 (VICTOR EQUIPMENT CO.) <br> * Ansprüche 1-12 * | 1 | |
| A | VDI ZEITSCHRIFT. <br> vol. 126, no. 6, März 1984, DUSSELDORF DE <br> Seiten 180 - 184; M.NICOLAI: <br> "Automatische Brennerpositionierung an Brennschneidmaschinen" <br> * Seite 181, rechte Spalte - Seite 184, linke Spalte * | 2 | |
| D,A | DE-A-3735598 (MESSER GRIESHEIM GMBH) <br> * Anspruch 1 * | 4 | |
| A | DE-A-3510382 (MESSER GRIESHEIM GMBH) <br> * Anspruch 1 * | 1 | RECHERCHIERTE SACHGEBIETE (Int. Cl.5) |
| D,A | DE-A-3447304 (MESSER GRIESHEIM GMBH) <br> * Anspruch 1 * | 4 | B23K |

Der vorliegende Recherchenbericht wurde für alle Patentansprüche erstellt

| Recherchenort | Abschlußdatum der Recherche | Prüfer |
|---|---|---|
| BERLIN | 28 NOVEMBER 1990 | WUNDERLICH J. |